(19) **Europäisches Patentamt**

**European Patent Office**

**Office européen des brevets**

(11) Veröffentlichungsnummer: **0 512 293 B1**

(12) **EUROPÄISCHE PATENTSCHRIFT**

(45) Veröffentlichungstag der Patentschrift: **11.10.95**

(51) Int. Cl.6: **C09J 4/00**

(21) Anmeldenummer: **92106599.1**

(22) Anmeldetag: **16.04.92**

(54) **Copolymerisate für Klebstoffe.**

(30) Priorität: **04.05.91 DE 4114640**

(43) Veröffentlichungstag der Anmeldung:
**11.11.92 Patentblatt 92/46**

(45) Bekanntmachung des Hinweises auf die
Patenterteilung:
**11.10.95 Patentblatt 95/41**

(84) Benannte Vertragsstaaten:
**DE ES FR GB IT NL**

(56) Entgegenhaltungen:
**EP-A- 0 210 309**
**EP-A- 0 277 413**

**WPIL, Sektion Ch, Woche 8519, 03. Juli 1985
Derwent Publications Ltd., London (GB; Klasse A, Seite 344, AN 85-112805/19**

(73) Patentinhaber: **BASF Aktiengesellschaft
Carl-Bosch-Strasse 38
D-67063 Ludwigshafen (DE)**

(72) Erfinder: **Pfoehler, Peter, Dr.
Franz Stuetzel-Strasse 51
W-6720 Speyer (DE)**
Erfinder: **Kroener, Hubertus, Dr.
Londoner Ring 6
W-6700 Ludwigshafen (DE)**
Erfinder: **Seyffer, Hermann, Dr.
Maass-Strasse 4
W-6900 Heidelberg (DE)**
Erfinder: **Tuerk, Johannes
Oberkreuzstrasse 19
W-6737 Boel-Iggelheim (DE)**
Erfinder: **Zettl, Alexander
Homburger Strasse 5
W-6700 Ludwigshafen (DE)**

**Beschreibung**

Die Erfindung betrifft ein Verfahren zur Herstellung von Haftklebeerzeugnissen unter Verwendung von wäßrigen Copolymerisatdispersionen, dadurch gekennzeichnet, daß die Copolymerisate durch einstufige Copolymerisation eines Monomerengemisch, enthaltend

A) 50 bis 100 Gew.-% mindestens eines $C_1$-$C_{16}$-Alkylacrylats,

B) 0 bis 40 Gew.-% mindestens einer copolymerisierbaren monoolefinisch ungesättigten Verbindung mit mindestens einer Carbonsäure-, Hydroxyl-, Amino-, bzw. Amido- oder Imido, Dicarbonsäureanhydrid-, Epoxy-, Keto oder Aldehydgruppe

C) 0 bis 50 Gew.-% weiterer copolymerisierbarer olefinisch ungesättigter Verbindungen,

in Gegenwart von 0,01 bis 5,0 Gew.-%, bezogen auf das Copolymerisat, einer Verbindung mit mindestens zwei Thiolgruppen im Molekül, wobei Verbindungen mit 8 Thiolgruppen ausgeschlossen sind erhalten werden.

Weiterhin betrifft die Erfindung die Verwendung der Copolymerisate in Klebstoffen.

Verbindungen mit Thiolgruppen, z.B. tert.-Dodecylmercaptan werden bei Polymerisationen bekannterweise als Regler zur Verminderung des Molekulargewichts eingesetzt.

Die Verwendung von Verbindungen mit mehr als einer Thiolgruppe für diesen Zweck ist in der Literatur kaum beschrieben. Aus einem Artikel von C.A. Uraneck und J.E. Burleigh in Journal of Applied Polym. Sci., 12 (1968), Seite 1075-1095, geht hervor, daß Dipentendithiol und 1, 10-Decandithiol neben vielen anderen Thiolen versuchsweise als Regler bei der Copolymerisation von Butadien und Acrylnitril eingesetzt wurden. In der J 57028124 werden als mögliche Regler bei der Vinylchloridpolymerisation unter anderem auch solche mit zwei Thiolgruppen genannt.

Anforderungen, die an Copolymerisate im Falle der Verwendung als Klebstoffe, z.B. Haftklebstoffe, gestellt werden, sind vor allem eine gute Haftung auf Oberflächen (Adhäsion) und eine gute innere Festigkeit (Kohäsion), um einen möglichst festen Verbund der Verklebungen zu erreichen. Diese beiden Anforderungen können kaum gleichermaßen gut erfüllt werden, da viele Maßnahmen, die z.B. eine gute Kohäsion bewirken, sich wiederum nachteilig auf die Adhäsion auswirken. So ist dem Fach z.B. bekannt, daß die Kohäsion mit steigendem Molekulargewicht zunimmt, die Adhäsion sich jedoch in entsprechendem Ausmaß gleichzeitig verschlechtert.

Aus der DE-A-37 00 248 sind wäßrige Dispersionen von Copolymerisaten für die Verwendung als Haftklebstoffe bekannt.

Diese Copolymerisate weisen als Klebstoffe jedoch noch den Mangel auf, daß bei ausreichender Adhäsion die Kohäsion noch unbefriedigend ist.

Aus JP-A-60 053 552 (Dainippon Ink Chem.) sind Haftklebstoffe bekannt, welche in einem zweistufigen Polymerisationsverfahren hergestellt werden.

EP-A-210 309 betrifft flüssige Oligomere mit mehreren Acryldoppelbindungen, die durch Strahlung in Gegenwart von MercaptoReglern gehärtet werden. Gegenstand der EP-A-277 413 sind Klebstoffe bzw. Primer, die im wesentlichen aus Monomeren mit Thiolgruppen aufgebaut sind.

Aufgabe der vorliegenden Erfindung waren daher Copolymerisate, welche in Verklebungen sowohl eine gute Adhäsion als auch Kohäsion bewirken.

Demgemäß wurde das eingangs definierte Verfahren gefunden.

Die Copolymerisate enthalten neben den oben definierten Monomeren A) vorzugsweise auch Monomere B). Besonders bevorzugt weisen die Copolymerisate einen Gehalt an Monomeren A), B) und C) auf.

Der Gehalt an Monomeren A) im Copolymerisat beträgt 50 bis 100 Gew.-%, bevorzugt 50 bis 99,4 Gew.-% und besonders bevorzugt 70 bis 99,4 Gew.-%; derjenige der Monomeren B) ist 0 bis 40 Gew.-%, bevorzugt 0,1 bis 10 und besonders bevorzugt 0,1 bis 5 Gew.-%. Die Monomeren C) sind zu 0 bis 50, bevorzugt 0,5 bis 40 und besonders bevorzugt zu 0,5 bis 25 Gew.-% im Copolymerisat enthalten.

Bei den Monomeren A) handelt es sich bevorzugt um $C_2$-$C_{10}$-, besonders bevorzugt um $C_4$-$C_{10}$-Alkylacrylate. Vorzugsweise finden solche Monomeren A) Verwendung, deren Homopolymerisate Glasübergangstemperaturen unter -20°C, vorzugsweise unter -35°C aufweisen. Als Monomere A) genannt seien z.B. n-Butylacrylat, Isobutylacrylat, n-Hexylacrylat, 2-Ethylhexylacrylat, n-Octylacrylat oder Isooctylacrylat.

Als Monomere B) kommen monoolefinisch ungesättigte Verbindungen mit mindestens einer Carbonsäure-, Hydroxyl-, Amino- bzw. Amido oder Imido-, Dicarbonsäureanhydrid-, Epoxy-, Keto- oder Aldehydgruppe in Betracht.

Als Verbindungen mit mindestens einer Epoxygruppe sind Glycidylacrylat und Glycidylmethacrylat von besonderer Bedeutung.

Eine Verbindung mit einer Dicarbonsäureanhydridgruppe ist z.B. Maleinsäureanhydrid.

2

Als Verbindungen mit einer Keto- oder Aldehydgruppe sind z.B. Diacetonacrylamid oder Acetoacetoxyethylmethacrylat erwähnenswert. Aminogruppen enthaltende Monomere sind z.B. (Meth)acrylester wie Dimethylaminoethyl(meth)acrylat, Diethylaminoethyl(meth)acrylat.

Bevorzugte Monomere B) sind Hydroxygruppen enthaltende Monomere, insbesondere solche mit einer Hydroxygruppe, vorzugsweise $C_1$-$C_8$-Hydroxyalxyl(meth)acrylate wie z.B. 2-Hydroxyethyl(meth)acrylat und 2-Hydroxypropyl(meth)acrylat.

Ebenfalls bevorzugt handelt es sich bei den Monomeren B) um monoolefinisch ungesättigte Carbonsäuren oder Dicarbonsäuren, insbesondere solchen mit 3 bis 5 Kohlenstoffatomen, oder Amide bzw. Imide dieser Säuren, wobei die Amide oder Imide am Stickstoffatom zusätzlich durch ein bzw. zwei $C_1$-$C_6$-Alkyl- oder -Hydroxyalkylreste substituiert sein können.

In Betracht kommen z.B. Acrylsäure, Methacrylsäure, Maleinsäure, Fumarsäure, Maleinimid, (Meth)-acrylamid oder N-Methylol(meth)acrylamid.

Ganz besonders bevorzugt sind $C_3$-$C_5$-Carbonsäuren oder -Dicarbonsäuren, insbesondere aber Acrylsäure und Methacrylsäure.

Als weitere copolymerisierbare olefinisch ungesättigte Verbindungen C) kommen vorzugsweise monoolefinisch ungesättigte Verbindungen, deren Homopolymerisate Glasübergangstemperaturen oberhalb -20°C, bevorzugt oberhalb -10°C und insbesondere oberhalb +5°C aufweisen, in Betracht. Genannt seien z.B. Methyl(meth)acrylat, Ethylmethacrylat, tert.-Butylmethacrylat, Styrol, $\alpha$-Methylstyrol, (Meth)acrylnitril, (Meth)-acrylamid oder Vinylacetat.

Die Anteile der Monomeren A), B) und C) werden vorzugsweise so gewählt, daß die Glasübergangstemperatur des Copolymerisats unter 0°C, besonders bevorzugt zwischen -25°C und -50°C liegt. Die Glastemperatur läßt sich nach üblichen Methoden, z.B. aus der Messung des E-Moduls im Kriechversuch als Funktion der Temperatur oder mit der Differentialthermoanalyse (DTA) bestimmen (s. dazu A. Zosel, Farbe und Lack 82 (1976), 125-134).

Die Herstellung des Copolymerisats erfolgt in Gegenwart von 0,01 bis 5 Gew.-%, bevorzugt 0,01 bis 2 Gew.-%, besonders bevorzugt 0,02 bis 1 Gew.-%, bezogen auf das Copolymerisat, einer Verbindung mit mindestens zwei Thiolgruppen im Molekül. Die Verbindung mit mindestens zwei Thiolgruppen wird bei der Polymerisation in das Polymergerüst weitgehend mit eingebaut.

Es ist anzunehmen, daß der Einbau weitgehend durch Mechanismen der Kettenübertragung und Kettenabbruch, wie sie für Polymerisationsregler wie z.B. tertiär Dodecylmercaptan allgemein bekannt sind, erfolgt. Auch Reaktionen der Thiolgruppen mit funktionellen Gruppen, welche über entsprechende Monomere im entstehenden Polymer eingebaut werden, sind möglich.

Bei den Verbindungen mit mindestens zwei Thiolgruppen im Molekül kann es sich um anorganische oder organische niedemolekulare, oligomere oder polymere Verbindungen handeln. Es ist auch möglich, Verbindungen einzusetzen, bei denen die Thiolgruppen in situ vor oder während der Polymerisation, z.B. durch Hydrolysereaktionen, entstehen.

Insbesondere zu erwähnen sind z.B. aromatische Thiole, wie Dimercaptobenzol, Dimercaptotoluol, Dimercaptoanisol und Trimercaptobenzol oder aliphatische Thiole, z.B. $C_2$-$C_{12}$-Alkandithiole wie 1,2-Ethandithiol, 1,3-Propandithiol, 1,6-Hexandithiol, 1,9-Nonandithiol oder cycloaliphatische Thiole, z.B. 1,3,6-Trimercaptocyclohexan.

Als weitere Verbindungen kommen z.B. Dimercapto-1,8-dioxa-3,6-octan, Bis(2-mercaptoethyl)sulfid oder Thioglycolsäureester von zwei- oder mehrwertigen Alkoholen oder Thiocarbonsäurederivate wie Dithiobernsteinsäure, 6-Mercapto-thiohexansäure in Betracht.

Weiterhin können auch z.B. Silane oder Siloxane mit mindestens zwei Thiolgruppen verwendet werden. Vorzugsweise enthalten diese Silane oder Siloxane keine hydrolysierbaren Substituenten, wie z.B. Alkoxygruppen.

Bei Oligomeren oder Polymeren, welche mindestens zwei Thiolgruppen als Substituenten enthalten, kann es sich z.B. um Alkylenpolysulfide (Thiokole), aber auch um Polybutadiene, Polyisobutylene, Polyethylenoxide, Polytetrahydrofurane, Polyvinylether, Polysiloxane oder Thioglycolate von Polyvinylalkoholen handeln.

Bevorzugt sind Verbindungen mit zwei bis drei, insbesondere mit zwei Thiolgruppen im Molekül.

Ebenfalls bevorzugt sind organische Verbindungen, insbesondere solche mit einem Molekulargewicht zwischen 90 und 5.000 g/mol.

Die erfindungsgemäßen Copolymerisate können durch übliche Polymerisationsmethoden wie Lösungspolymerisation, Suspensionspolymerisation, Emulsionspolymerisation oder Polymerisation in Substanz hergestellt werden, wobei die Verbindung mit mindestens zwei Thiolgruppen und auch die Monomeren jeweils in voller Menge oder teilweise vorgelegt oder auch zumindest teilweise dem Polymerisationsansatz in Chargen oder kontinuierlich zudosiert werden können.

Bevorzugt erfolgt die Herstellung der Copolymerisate durch Emulsionspolymerisation.

Als wasserlösliche Initiatoren sind bei der Emulsionspolymerisation z.B. Peroxide wie Natrium-, Kalium- und Ammoniumperoxid, Wasserstoffperoxid oder Perborate geeignet.

Als Emulgatoren, bzw. Dispergierhilfsmittel können z.B. Alkalisalze von Fettsäuren, z.B. Natriumstearat oder Natriumoleat, Alkalisalze von sulfatierten Ölen, Alkalisalze von Sulfonsäuren, insbesondere Alkylsulfonsäuren, Alkalisalze von oxalkylierten Alkylphenolen, durch ein oder zwei Alkylsulfatgruppen substituierte Diphenylether sowie Polyadditionsprodukte von Alkylenoxiden wie Ethylenoxid, Propylenoxid oder deren Gemisch mit Fettsäuren, Fettalkoholen, Fettamiden oder Alkylphenolen eingesetzt werden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan oder tert.- Dodecylmercaptan. Der Anteil dieser Regler kann insbesondere 0 bis 0,3 Gew.-%, bezogen auf das Copolymerisat, betragen.

Die Temperatur bei der Emulsionspolymerisation beträgt vorzugsweise 40 bis 100°C, insbesondere 70 bis 95°C.

Besonders bewährt für die Emulsionspolymerisation hat sich ein Zulauf-Verfahren, bei dem ein Teil der Monomeren, insbesondere bis zu 10 Gew.-%, zusammen mit Wasser, Emulgatoren, Initiatoren und gegebenenfalls Regler sowie gegebenenfalls die Verbindung mit mindestens zwei Thiolgruppen vorgelegt werden.

Der Rest der Monomeren und, gegebenenfalls auch der Rest der Verbindung mit mindestens zwei Thiolgruppen im Molekül sowie gegebenenfalls weitere Mengen Regler können in Wasser emulgiert bei der Polymerisationstemperatur gleichzeitig mit einer wäßrigen Lösung weiterer Initiatormengen zudosiert werden. Dabei kann die Zusammensetzung der vorgelegten und des zudosierten Monomerengemischs gleich oder verschieden sein.

Die bei der Emulsionspolymerisation schließlich erhaltene wäßrige Dispersion hat vorzugsweise einen Feststoffgehalt von 40 bis 70 Gew.-%.

Die wäßrigen Copolymerisatdispersionen eignen sich zur Herstellung von Haftklebererzeugnissen.

Für diese Verwendung können den wäßrigen Dispersionen weitere sog. klebrig-machende Harze zugesetzt werden, wie sie z.B. aus Adhesives Age, Juli 1987, Seite 19-23 oder Polym Mater. Sci. Eng., 61 (1989), Seite 588-592 bekannt sind. Bei diesen Harzen handelt es sich insbesondere um in Dispersion vorliegende natürliche oder synthetische Harzsäuren oder deren Ester. Das Gewichtsverhältnis von erfindungsgemäßem Polymerisat zu klebrig machendem Harz liegt vorzugsweise zwischen 5 : 1 bis 1 : 5, besonders bevorzugt zwischen 2 : 1 bis 1 : 1.

Als weitere Zusätze können die Dispersionen übliche Mengen an Verdickungsmitteln, Weichmachern und/oder Pigmenten enthalten.

Ferner können anorganische oder organische Füllstoffe als Zusätze verwendet werden. Beispiele für derartige Füllstoffe sind Kreide, Micro-Glaskugeln, mineralische Silikate oder Teflonpulver.

Zur Herstellung von Haftklebeerzeugnissen können die Dispersionen in üblicher Weise, z.B. durch Spritzen, Rakeln, Rollen, Gießen, Walzen oder Tauchen auf geeignete Substrate aufgetragen werden.

Auch ein indirekter Auftrag der Dispersionen, z.B. nach dem Transferverfahren unter Mitverwendung eines silikonisierten Papieres ist möglich. Nach dem Auftrag werden die beschichteten Substrate in üblicher Weise getrocknet.

Die Dispersionen können u.a. für die Herstellung von Klebeetiketten oder anderen selbstklebenden Artikeln verwendet werden. Als Träger kommen Folien aus Polyethylen, Polypropylen, Polyethylenglykolterephthalat, Polyvinylchlorid und Metall sowie Papier in Betracht.

Die erhaltenen Klebstoffschichten zeichnen sich sowohl durch eine gute Adhäsion zu den Substratoberflächen als auch durch eine gute Kohäsion aus.

Beispiele

I Herstellung der Copolymerisatdispersionen

In einem Reaktionsgefäß mit Rührer und zwei Zulaufgefäßen wurden 150 g Wasser und gegebenenfalls auch die Verbindung mit mindestens zwei Thiolgruppen vorgelegt.

Die Zulaufgefäße enthielten folgende Gemische:

Zulauf I:     550 g Monomerenmischung gemäß der Tabelle

5,5 g $C_{12}$-Alkyldiphenylethersulfonat (Dowfax 2A1), in Beispielen 1 bis 5 (bzw. 2,75 g in Beispielen 6 bis 12)

1,65 g Natriumlaurylsulfat in Beispielen 1 bis 5 (bzw. 0,55 g in Beispielen 6 bis 12)

4

150 g Wasser

Zusätzlich enthielt Zulauf I einen Regler und/oder eine Verbindung mit mindestens zwei Thiolgruppen gemäß Tabelle (in der Tabelle zusammenfassend als Thiolverbindung bezeichnet)

Zulauf II:   100 g Wasser

1,65 g Natriumperoxodisulfat

Die Vorlage wurde auf 85 °C erhitzt und 1 Gew.-% des Zulaufs 1 sowie 20 Gew.-% des Zulaufs 2 unter Rühren zugegeben. Nach 15 min Anpolymerisieren wurden die beiden Zuläufe wärend 3 h zugegeben. Bei 85 °C wurde noch ca. 1 h nachpolymerisiert und dann abgekühlt. Anschließend wurde mit einer 25 %igen Ammoniaklösung ein pH von 7 eingestellt.

II Anwendungstechnische Prüfung

Zur Prüfung der anwendungstechnischen Eigenschaften wurden die Dispersionen mit einem Auftragsgewicht von ca. 20 g/m² auf Polyesterfolie (Hostaphan® RN 36, Firma Hoechst) gerakelt und die beschichteten Folien 3 Minuten bei 90 °C im Umluft-Trockenschrank getrocknet. Die beschichteten Folien wurden dann in 2 cm breite Prüfstreifen geschnitten.

Zur Bestimmung der Scherfestigkeit wurden die Klebestreifen in 2,5 cm Länge auf ein V2A-Prüfblech geklebt, mit einer 1 kg schweren Rolle 1 mal angerollt, 24 h gelagert und anschließend im Hängen mit einem 1 kg Gewicht belastet. Das Maß für die Scherfestigkeit war die Zeit bis zum Abfallen des Gewichts; es wurde jeweils der Durchschnitt aus 5 Messungen berechnet. Bei diesen Messungen wurde die Klebeschicht zerstört (Kohäsionsbruch).

Bei der Bestimmung der Schälfestigkeit (Adhäsion) wurde jeweils ein Klebestreifen auf ein V2A-Prüfblech geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 90 °C-Winkel von der Prüffläche (V2A-Stahl) abgezogen und der dazu benötigte Kraftaufwand gemessen. Das Maß für den Schälwert war die Kraft in N, die sich als Durchschnittswert aus fünf Messungen ergab.

Die Prüfungen der Scher- und Schälfestigkeiten wurden bei 23 °C und 50 % rel. Luftfeuchte durchgeführt.

Als ein Maß für die klebtechnischen Eigenschaften (hohe Schälfestigkeit, d.h. Adhäsion und hohe Scherfestigkeit, d.h. Kohäsion) diente das Produkt aus Schälfestigkeit und Scherfestigkeit (Tabelle).

Tabelle

Zusammensetzung der Copolymerisate und Prüfergebnisse

| Nr. | Copolymerisatzusammensetzung, Monomere in Gew.-% | Thiolverbindung | Schälfestigkeit [N/2cm] | Scherfestigkeit [h] | Prüfzahl [N·h/2 cm] |
|---|---|---|---|---|---|
| 1 | 100 BA | 0,10 tDMK | 10,2 | 0,27 | 2,8 |
| 2 | 100 BA | 0,10 HDT*) | 9,1 | 2,6 | 23,7 |
| 3 | 100 BA | 0,10 NDT*) | 6,0 | 6,0 | 36,0 |
| 4 | 100 BA | 0,10 ECHDT*) | 3,9 | 7,4 | 28,9 |
| 5 | 100 BA | 0,02 tDMK, 0,06 HDT*) | 6,0 | 9,4 | 56,4 |
| 6 | 97,5 BA, 1,5 MMA, 1,0 AS | 0,13 tDMK | 9,2 | 0,2 | 1,8 |
| 7 | 97,5 BA, 1,5 MMA, 1,0 AS | 0,05 HDT | 12,9 | 18,4 | 237,4 |
| 8 | 97,5 BA, 1,5 MMA, 1,0 AS | 0,02 tDMK, 0,04 HDT*) | 10,4 | >100 | >1000 |
| 9 | 97,5 BA, 1,5 MMA, 1,0 AS | 0,04 HDT*) | 6,8 | >150 | >1000 |
| 10 | 97,5 BA, 1,5 MMA, 1,0 AS | 1,0 Thiokol LP-12**) | 6,0 | >100 | > 600 |
| 11 | 97,5 BA, 1,5 MMA, 1,0 AS | 1,0 Thiokol LP-2c**) | 6,6 | >100 | > 660 |
| 12 | 97,5 BA, 1,5 MMA, 1,0 AS | 0,10 TGE-60*) | 6,2 | >120 | > 740 |

BA = n-Butylacrylat, MMA = Methylmethacrylat, AS = Acrylsäure
tDMK = tert.-Dodecylmercaptan, HDT = 1,6-Hexandithiol, NDT = Nonandithiol
ECHDT = Ethylcyclohexyldithiol
TGE-60 = Thioglycolsäureester eines mehrwertigen Alkohols (Firma Henkel)
*) gesamte Menge in Vorlage
**) Polyalkylensulfide mit 2 Thiolgruppen (LP-12) bzw. mehr als zwei Thiolgruppen (LP 2c) und einem Molgewicht jeweils von ~4.000 g/mol (Thiokol GmbH)
Prüfzahl = Schälfestigkeit * Scherfestigkeit [N·h/2cm]
Anmerkung: In den Beispielen 6 und 7 wurden die Gewichtsanteile tDMK und HDT so gewählt, daß die molaren Equivalente der SH-Gruppen jeweils gleich waren.

**Patentansprüche**

1. Verfahren zur Herstellung von Haftklebeerzeugnissen unter Verwendung von wäßrigen Copolymerisatdispersionen, dadurch gekennzeichnet, daß die Copolymerisate durch einstufige Copolymerisation

6

eines Monomerengemisch, enthaltend

A) 50 bis 100 Gew.-% mindestens eines $C_1$-$C_{16}$-Alkylacrylats,

B) 0 bis 40 Gew.-% mindestens einer copolymerisierbaren monoolefinisch ungesättigten Verbindung mit mindestens einer Carbonsäure-, Hydroryl-, Amino-, bzw. Amido- oder Imido, Dicarbonsäureanhydrid-, Epoxy-, Keto oder Aldehydgruppe

C) 0 bis 50 Gew.-% weiterer copolymerisierbarer olefinisch ungesättigter Verbindungen,

in Gegenwart von 0,01 bis 5,0 Gew.-%, bezogen auf das Copolymerisat, einer Verbindung mit mindestens zwei Thiolgruppen im Molekül, wobei Verbindungen mit 8 Thiolgruppen ausgeschlossen sind, erhalten werden.

2. Verfahren gemäß Anspruch 1, dadurch gekennzeichnet, daß es sich bei B) um eine monoolefinisch ungesättigte $C_3$-$C_5$-Carbonsäure oder -Dicarbonsäure, deren Amide oder Imide, welche am Stickstoffatom durch ein bzw. zwei $C_1$-$C_6$-Alkyl- oder Hydroxyalkylreste substituiert sein können, oder um $C_1$-$C_8$-Hydroxyalkyl(meth)acrylate handelt.

3. Verfahren gemäß Anspruch 1 oder 2, dadurch gekennzeichnet, daß es sich bei der Verbindung mit mindestens zwei Thiolgruppen im Molekül um ein $C_2$-$C_{12}$-Alkandithiol handelt.

**Claims**

1. A process for the preparation of a contact adhesive product using an aqueous copolymer dispersion, wherein the copolymer is obtained by one-step copolymerization of a monomer mixture, containing

A) from 50 to 100% by weight of one or more $C_1$-$C_{16}$-alkyl acrylates,

B) from 0 to 40% by weight of one or more copolymerizable monoolefinically unsaturated compounds having one or more carboxyl, hydroxyl, amino or amido or imido, dicarboxylic anhydride, epoxy, keto or aldehyde groups and

C) from 0 to 50% by weight of further copolymerizable olefinically unsaturated compounds ,

in the presence of from 0.01 to 5.0% by weight, based on the copolymer, of a compound having two or more thiol groups in the molecule, excluding compounds having 8 thiol groups.

2. A process as claimed in claim 1, wherein B) is a monoolefinically unsaturated $C_3$-$C_5$-carboxylic acid or - dicarboxylic acid, or an amide or imide thereof, which may be substituted at the nitrogen atom by one or two $C_1$-$C_6$-alkyl or -hydroxyalkyl radicals, or is a $C_1$-$C_8$-hydroxy-alkyl (meth)acrylate.

3. A process as claimed in claim 1 or 2, wherein the compound having two or more thiol groups in the molecule is a $C_2$-$C_{12}$-alkanedithiol.

**Revendications**

1. Procédé de fabrication de produits auto-adhésifs avec utilisation de dispersions aqueuses de copolymères, caractérisé en ce que les copolymères sont obtenue par copolymérisation en une seule étape d'un mélange de monomères qui contient

A) 50 à 100% en poids d'au moins un acrylate d'alkyle en $C_1$-$C_{16}$,

B) 0 à 40% en poids d'au moins un composé à insaturation mono-oléfinique copolymérisable, comportant au moins un groupement acide carboxylique, hydroxy, amino, amido ou imido, anhydride d'acide dicarboxylique, époxy, céto ou aldéhyde,

C) 0 à 50% en poids d'autres composés à insaturation oléfinique copolymérisables,

en présence de 0,01 à 5,0% en poids, par rapport au copolymère, d'un composé comportant au moins deux groupements thiol dans la molécule, les composés à 8 groupements thiol étant exclus.

2. Procédé selon la revendication 1, caractérisé en ce que, pour ce qui est de B), il s'agit d'un acide carboxylique ou dicarboxylique en $C_3$-$C_5$ à insaturation mono-oléfinique, de ses amides ou imides, qui peuvent être substitués sur l'atome d'azote par un ou deux restes alkyle en $C_1$-$C_6$ ou hydroxyalkyle, ou de (méth)acrylates d'hydroxyalkyle en $C_1$-$C_8$.

3. Procédé selon la revendication 1 ou 2, caractérisé en ce que, pour ce qui est du composé comportant au moins deux groupements thiol dans la molécule, il s'agit d'un alcanedithiol en $C_2$-$C_{12}$.